# EUROPÄISCHE PATENTANMELDUNG

(11) **EP 3 502 203 A1**
(43) Veröffentlichungstag der Anmeldung: **26.06.2019**
(21) Anmeldenummer: 18214371.9
(22) Anmeldetag: 20.12.2018
(51) Int. Cl.: C09J 7/38, C09J 11/08, C09J 133/04

(54) **SELBSTKLEBENDE FOLIE**

(30) Priorität: 22.12.2017 DE 102017131082
(71) Anmelder: Regu GmbH & Co. KG, 91052 Erlangen (DE)
(72) Erfinder: HARTUNG, Florian, 91052 Erlangen (DE); KOENIG, Ralf, 90419 Nürnberg (DE)
(74) Vertreter: Dr. Gassner & Partner mbB

(57) **Zusammenfassung**

Selbstklebende Folie (1), die ablösbar auf einem Untergrund anbringbar ist, mit einer eine Sichtseite (3) und eine Klebeseite (4) aufweisenden Folie (2), wobei die Klebeseite (4) mit einer Mischung (5) aus einem Klebstoff und einem nichtklebrigen Copolymer beschichtet ist.

## Beschreibung

Die Erfindung betrifft eine selbstklebende Folie, die ablösbar auf einem Untergrund anbringbar ist, mit einer eine Sichtseite und eine Klebeseite aufweisenden Folie.

Derartige an sich bekannte Folien können z. B. auf einer Glasfläche, insbesondere auf einer Fensterscheibe oder einer anderen Unterlage angebracht werden. Das Anbringen der Folie kann z. B. zur Dekoration oder für Werbezwecke erfolgen.

Herkömmliche selbstklebende Folien werden zumeist mit einer rückseitigen, d. h. auf der Klebeseite aufgebrachten Schutzfolie hergestellt. Um die selbstklebende Folie auf einem Untergrund anzubringen, wird zunächst die Schutzfolie entfernt. Anschließend wird die selbstklebende Folie mit der Klebeseite auf den Untergrund, beispielsweise eine Glasscheibe oder eine andere glatte Oberfläche, geklebt. Insbesondere bei größeren Folien tritt häufig das Problem auf, dass nach dem Aufkleben Luftblasen eingeschlossen sind. Insbesondere wenn die Luftblasen allseitig von Klebstoff umgeben sind, lassen sie sich nur mit Mühe oder gar nicht nach außen schieben. Wenn derartige herkömmliche selbstklebende Folien von mit der Handhabung unerfahrenen Personen angebracht werden, besteht die Gefahr, dass die Folie beim Entfernen der Luftblasen zerkratzt oder beschädigt wird.

Bei bestimmten selbstklebenden Folien wird empfohlen, den Untergrund, beispielsweise eine Fensterscheibe, vor dem Aufbringen der Folie mit Wasser zu benetzen. Dadurch ergibt sich der Vorteil, dass die Folie nach dem Anbringen zumindest geringfügig verschoben und positioniert werden kann. Zudem besteht dann die Möglichkeit, eingeschlossene Luftblasen leichter mit einem Werkzeug wie einem Spachtel nach außen zu drücken, um die eingeschlossenen Luftblasen zu entfernen. Dadurch entsteht allerdings der Nachteil, dass anschließend abgewartet werden muss, bis das zwischen dem Untergrund und der Folie eingeschlossene Wasser verdunstet ist. Dieser Verdunstungsprozess kann in Abhängigkeit von der Umgebungstemperatur und der Größe der Folie mehrere Tage dauern.

Der Erfindung liegt daher die Aufgabe zugrunde, eine selbstklebende Folie anzugeben, die einfacher auf einem Untergrund angebracht werden kann.

Zur Lösung dieser Aufgabe ist bei einer selbstklebenden Folie der eingangs genannten Art erfindungsgemäß vorgesehen, dass die Klebeseite mit einer Mischung aus einem Klebstoff und einem nichtklebrigen Copolymer beschichtet ist.

Erfindungsgemäß wurde überraschend herausgefunden, dass durch die Zugabe eines Additivs in Form des nichtklebrigen Copolymers zu dem Klebstoff Bereiche der Klebeseite entstehen, die wenig oder gar nicht kleben. Demnach besteht die Rückseite der Folie, d. h. die Klebeseite, aus Bereichen, die auf dem Untergrund kleben und solchen Bereichen, die nicht auf dem Untergrund haften oder kleben. Die klebenden Bereiche sind ausschließlich mit dem Klebstoff beschichtet, die nichtklebenden Bereiche weisen das Copolymer auf. In dem das Copolymer aufweisenden Bereichen ist lediglich eine verringerte oder gar keine Haftung mit dem Untergrund vorhanden, wodurch eine Vielzahl von "Kanälen" entsteht, durch die gegebenenfalls vorhandene Luftblasen nach außen verschoben werden können. Das Herausdrücken der Luftblasen kann z. B. mit einem Kunststoffspachtel oder einer Walze erfolgen.

Die erfindungsgemäße Folie eignet sich besonders gut zum Anbringen auf glatten Flächen, insbesondere auf einer Glasfläche.

Bei der selbstklebenden Folie wird es bevorzugt, dass das nichtklebrige Copolymer ein Acrylat-Copolymer ist. Vorzugsweise kann es sich dabei um ein MMA-BMA-Copolymer handeln.

Im Rahmen der Erfindung kann es vorgesehen sein, dass der Klebstoff ein Acrylat-Copolymer-Klebstoff ist. Vorzugsweise kann ein 1K-Acrylat-Copolymer-Klebstoff verwendet werden. Ein Beispiel für einen derartigen Klebstoff ist das Produkt "GELVA GMS 4621 ADHESIVE", das von der Firma Cytec vertrieben wird.

Die Wirkung der erfindungsgemäßen selbstklebenden Folie beruht darauf, dass die Klebeseite an den Stellen, an denen sich das nichtklebrige Copolymer befindet, nichtklebrige Bereiche und an den Stellen, an denen sich der Klebstoff befindet, klebrige Bereiche aufweist.

Mit besonderem Vorteil kann es bei der erfindungsgemäßen selbstklebenden Folie vorgesehen sein, dass der Klebstoff und das nichtklebrige Copolymer in einem Verhältnis zwischen 10:90 und 90:10 vorliegen.

Um das Aufbringen der aus dem Klebstoff und dem nichtklebrigen Copolymer bestehenden Mischung auf die Klebeseite zu vereinfachen, kann es vorgesehen sein, dass der Klebstoff und das nichtklebrige Copolymer in einem organischen Lösungsmittel gelöst sind.

Vorzugsweise kann die selbstklebende Folie mit einem Dekor bedruckt sein. Weiter vorzugsweise ist die Klebeseite mit einer abziehbaren Schutzfolie versehen.

Die Folie weist den Vorteil auf, dass sie trocken übertragen und bei Bedarf nachträglich ablösbar ist. Ein Aushärtevorgang oder eine Wärmebehandlung ist - anders als bei anderen Klebstoffen - nicht erforderlich.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: einen Querschnitt durch eine erfindungsgemäße selbstklebende Folie,
- Fig. 2: eine Strukturformel eines MMA-BMA-Copolymers als Bestandteil der auf der Klebeseite aufgetragenen Mischung,
- Fig. 3: eine perspektivische Ansicht der gemessenen Energie beim Ablösen eines Abschnitts der erfindungsgemäßen selbstklebenden Folie von einem Untergrund, und
- Fig. 4: eine zweidimensionale Ansicht der gemessenen Energie beim Abziehen der Folie.

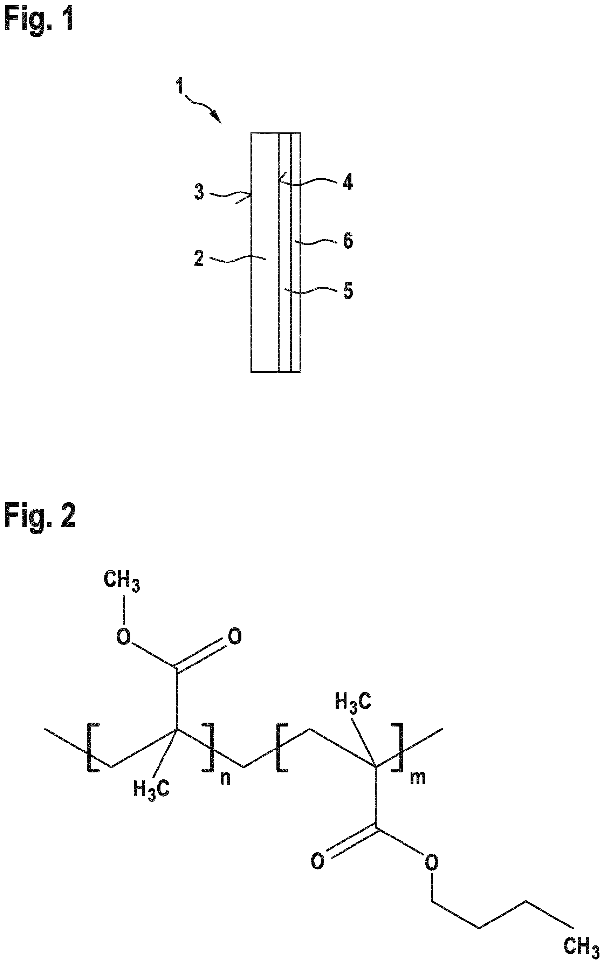

Fig. 1 ist eine schematische geschnittene Ansicht einer selbstklebenden Folie 1, umfassend eine Folie 2, die eine Sichtseite 3 und eine Klebeseite 4 aufweist. Die Klebeseite 4 ist mit einer Mischung 5 aus einem Klebstoff und einem nichtklebrigen Copolymer beschichtet. Auf der Mischung 5 ist eine Schutzfolie 6 angebracht, die vor dem Anbringen der selbstklebenden Folie 1 abgezogen wird.

In dem dargestellten Ausführungsbeispiel ist der Klebstoff ein 1K-Acrylat-Copolymer-Klebstoff. Es handelt sich um das Produkt "GELVA GMS 4621 ADHESIVE" der Firma Cytec. Als nichtklebriges Copolymer wird ein MMA-BMA-Copolymer eingesetzt.

Fig. 2 zeigt eine Strukturformel des MMA-BMA-Copolymers.

Die beiden Komponenten, d. h. der Klebstoff und das nichtklebrige Copolymer, werden gemischt und in einem organischen Lösungsmittel gelöst. Diese Mischung ist auf der Klebeseite 4 der selbstklebenden Folie 1 aufgetragen.

Durch die Mischung des Klebstoffs mit dem nichtklebrigen Copolymer weist die Klebeseite 4 sowohl nichtklebrige Bereiche als auch klebrige Bereiche auf. Dort, wo sich das nichtklebrige Copolymer befindet, sind nichtklebrige Bereiche vorhanden. Entsprechend weist die Klebeseite an denjenigen Stellen, an denen sich der Klebstoff befindet, klebrige Bereiche auf. Der Klebstoff und das nichtklebrige Copolymer sind mikroskopisch verteilt, wodurch sich klebrige Bereiche und benachbarte nicht klebrige Bereiche im Mikrometerbereich ergeben. Die Oberfläche der Mischung weist keine sichtbare Struktur auf.

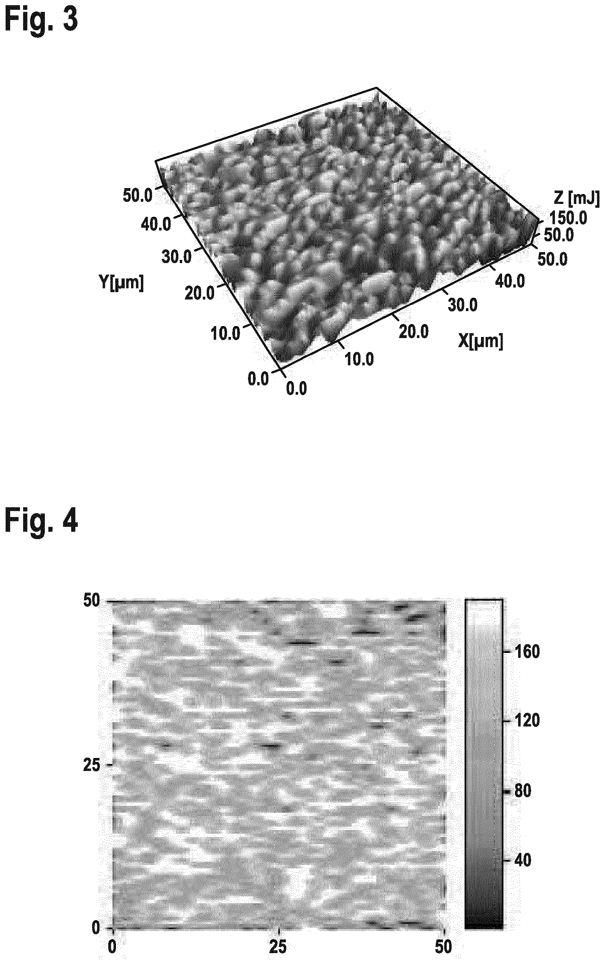

Die Fig. 3 und 4 zeigen die Ergebnisse einer Messung der Energie beim Abziehen einer auf einen Untergrund aufgebrachten selbstklebenden Folie. Es wird darauf hingewiesen, dass Fig. 3 und Fig. 4 nicht die aus dem Klebstoff und dem Copolymer bestehende Mischung, sondern die Energie beim Abziehen der Folie von dem Untergrund zeigen, d. h. die Verteilung der Klebekraft auf der Fläche.

Die Messung der Energie beim Abziehen der Folie erfolgt mittels "Atomic Force Microscopy". Dazu wird die Folie auf einer Unterlage fixiert. Ein Hebelarm (cantilever) wird über den Messbereich punktuell, senkrecht zur Kleberfläche von oben abgesenkt und beim Erreichen einer festgelegten Anpresskraft von 1 µN gestoppt. Nach dem Verstreichen einer Wartezeit, die in diesem Ausführungsbeispiel eine Sekunde dauert, wird der Hebelarm senkrecht zur Kleberfläche wieder entfernt. Dabei biegt sich der Hebelarm geringfügig, bis die Haftung zwischen dem Klebstoff und der Spitze nicht mehr ausreichend ist. Die dabei wirkende Kraft wird durch die Federkonstante des Hebelarms bestimmt. Die Spitze des Hebelarms besteht aus einer Silikonverbindung. Durch viele derartige punktuelle Messungen wird anschließend eine flächige Verteilung der Klebkräfte ermittelt. Die Klebkräfte werden durch Ermitteln der nötigen Energie zur Trennung der Spitze des Hebelarms von der Folie ermittelt. Der von dem Hebelarm senkrecht zur Klebstofffläche zurückgelegte Weg beträgt in diesem Ausführungsbeispiel 4 µm.

Fig. 3 ist eine dreidimensionale Darstellung der Energie beim Abziehen der Folie von einer Unterlage. Die x-Achse und die y-Achse geben die Erstreckung des getesteten Abschnitts der selbstklebenden Folie 1 in Mikrometer an, auf der z-Achse ist die zum Abziehen der selbstklebenden Folie 1 von dem Untergrund benötigte Energie in mJ angegeben.

Fig. 4 ist eine zweidimensionale Darstellung von Fig. 3 und somit eine Draufsicht von Fig. 3. Die horizontale Achse ist die x-Achse, die senkrechte Achse ist die y-Achse. Die zum Abziehen der selbstklebenden Folie aufzubringende Energie ist in Fig. 4 durch Graustufen dargestellt. Ein hohes Energieniveau ist weiß dargestellt, ein niedriges Energieniveau ist dunkel bzw. in schwarz dargestellt. Die dunklen, grauen und schwarzen Bereiche stellen Bereiche mit unterschiedlich starker Haftung und somit "Luftkanäle" dar.

Anhand der Fig. 3 und 4 ist erkennbar, dass die Klebeseite 4 lokal sehr unterschiedliche Haftkräfte aufweist. Bereiche mit hoher Haftkraft bzw. Klebekraft wechseln sich mit anderen Bereichen ab, an denen praktisch keine Haftung vorhanden ist. Auf diese Weise bilden sich mehr oder weniger zusammenhängende Bereiche in Form von Kanälen, die ein Verschieben von Lufteinschlüssen erlauben, nachdem die selbstklebende Folie 1 auf einem Untergrund angebracht worden ist. Eingeschlossene Luft kann somit über die nicht klebrigen Bereiche entfernt werden. Einerseits wird durch den auf der Klebeseite 4 vorhandenen Klebstoff der Mischung sichergestellt, dass die selbstklebende Folie 1 mit einer ausreichenden Klebkraft auf dem Untergrund haftet. Andererseits bewirkt das nichtklebrige Copolymer, dass Bereiche ohne Haftung oder mit lediglich geringer Haftung entstehen, die ein nachträgliches Verschieben von Lufteinschlüssen nach außen ermöglichen. Das Verschieben kann sowohl manuell als auch mit einem manuell handhabbaren Werkzeug wie einem Spachtel oder einer Walze erfolgen. Nach dem Entfernen der Lufteinschlüsse ergibt sich eine einwandfrei auf einem Untergrund aufgebrachte selbstklebende Folie. Anders als bei herkömmlichen Verfahren wird keine Flüssigkeit zur Benetzung des Untergrunds verwendet, sodass die selbstklebende Folie unmittelbar nach dem Aufbringen und Entfernen von Lufteinschlüssen in ihrem Endzustand vorliegt. Vor dem Anstreichen mit einer Rakel oder einer Rolle kann die Position der Folie durch Verschieben korrigiert werden.

### Bezugszeichenliste

- 1: selbstklebende Folie
- 2: Folie
- 3: Sichtseite
- 4: Klebeseite
- 5: Mischung
- 6: Schutzfolie

## Patentansprüche

1. Selbstklebende Folie (1), die ablösbar auf einem Untergrund anbringbar ist, mit einer eine Sichtseite (3) und eine Klebeseite (4) aufweisenden Folie (2), **dadurch gekennzeichnet, dass** die Klebeseite (4) mit einer Mischung (5) aus einem Klebstoff und einem nichtklebrigen Copolymer beschichtet ist.

2. Selbstklebende Folie nach Anspruch 1, **dadurch gekennzeichnet, dass** das nichtklebrige Copolymer ein Acrylat-Copolymer ist.

3. Selbstklebende Folie nach Anspruch 1 oder 2, **dadurch gekennzeichnet, dass** das nichtklebrige Copolymer ein MMA-BMA-Copolymer ist.

4. Selbstklebende Folie nach einem der vorangehenden Ansprüche, **dadurch gekennzeichnet, dass** der Klebstoff ein Acrylat-Copolymer-Klebstoff ist.

5. Selbstklebende Folie nach einem der vorangehenden Ansprüche, **dadurch gekennzeichnet, dass** der Klebstoff ein 1K-Acrylat-Copolymer-Klebstoff ist.

6. Selbstklebende Folie nach einem der vorangehenden Ansprüche, **dadurch gekennzeichnet, dass** die Klebeseite (4) an den Stellen, an denen sich das nichtklebrige Copolymer befindet, nichtklebrige Bereiche und an den Stellen, an denen sich der Klebstoff befindet, klebrige Bereiche aufweist.

7. Selbstklebende Folie nach einem der vorangehenden Ansprüche, **dadurch gekennzeichnet, dass** der Klebstoff und das nichtklebrige Copolymer in einem Verhältnis zwischen 10:90 und 90:10 vorliegen.

8. Selbstklebende Folie nach einem der vorangehenden Ansprüche, **dadurch gekennzeichnet, dass** der Klebstoff und das nichtklebrige Copolymer in einem organischen Lösungsmittel gelöst sind.

9. Selbstklebende Folie nach einem der vorangehenden Ansprüche, **dadurch gekennzeichnet, dass** die Klebkraft auf einer Glasplatte 0,5 N/25 mm beträgt, gemessen nach dem Verfahren "FTM1 Peel Adhesion 180°".

10. Selbstklebende Folie nach einem der vorangehenden Ansprüche, **dadurch gekennzeichnet, dass** sie mit einem Dekor bedruckt ist.
